# EUROPEAN PATENT APPLICATION

(11) **EP 0 905 006 A2**
(43) Date of publication of application: **31.03.1999**
(21) Application number: 98830557.9
(22) Date of filing: 23.09.1998
(51) Int. Cl.: B62D 7/14, B62D 13/06

(54) **A device for controlling the steering angle in trucks or articulated trucks**

(30) Priority: 24.09.1997 IT BO970574
(71) Applicant: Bettini, Marco, I-40010 Bentivoglio (Bologna) (IT)
(72) Inventor: Bettini, Marco, I-40010 Bentivoglio (Bologna) (IT)
(74) Representative: Lanzoni, Luciano

(57) **Abstract**

A device for controlling the steering angle in trucks or articulated trucks envisages that means (10) for detecting the angle (α) of the wheels (5) mounted on the front, steering axle and rear, self-steering axle (1, 2) are attached to at least one rotation pin (6) of the relative wheel (5) for each first and second axle (1, 2).

## Description

The present invention relates to a device for controlling the steering angle in trucks or articulated trucks.

To give medium- to large-sized trucks and articulated trucks greater manoeuvrability, self-steering axles are currently widely used, that is to say, a pair of wheels with relative dead axle connected to the rear wheel unit and self-steering when travelling in the normal direction of movement of the truck.

The problem of controlling the rotation of the self-steering axle arises when the vehicle is reversing, since in this situation the degree of rotation of the self-steering axle must be controlled. As is known, the synchronisation of the front, steered wheels of the vehicle (driving wheels in the case of articulated trucks) and those of the self-steering axle is controlled by a pair of detection parts (linear transducers) connected to both of the steering axles and acting upon a control unit which operates the above-mentioned self-steering axle; patents EP - 577.571, IT 1.268.353 and EP 678.440 by the same Applicant refer to said solution.

The introduction of transducers which are able to detect the steering angle of the front axle and the controlled axle means that it is possible to ascertain the exact (rather than supposed) angle reached. This means that failure to reach the desired steering angle, for example due to obstacles acting upon the wheels of the self-steering axle, does not prevent the wheels from positioning themselves at the desired angle once the obstacle has been cleared, since it is the transducer which "reads" the actual position and controls the hydraulic control unit.

Until now, for both the front axle and the rear, self-steering axle, these linear transducers have been fitted directly on the axle movement mechanism, often attached to or operating parallel with the actual actuator, or there is a combined actuator-transducer system in which the latter "reads" the position assumed by the axle and sends a signal to the electronic control unit, which processes the data (i.e.: transforms it into data equivalent to the steering angle assumed by the wheel) and makes any adjustments necessary by acting upon the actuator according to the software installed, or according to the operator's requirements (equal or opposite steering).

This type of system is practical and precise, but has some disadvantages involving system costs and safety: in this case, the use of an extremely precise, high quality linear transducer is required, raising the cost of system production. Moreover, the transducer is positioned in an area of the vehicle that is quite open and the transducer may be damaged by contact with debris or material from the surface of the road.

The aim of the present invention is, therefore, to overcome the above-mentioned disadvantages by providing a device for controlling the steering angle of the wheels of trucks or articulated trucks, structured in such a way that it is compact, with precision control and, at the same time, made using extremely economical parts.

The technical features of the present invention, in accordance with the above-mentioned aims, are described in the claims herein and the advantages are made more apparent in the detailed description that follows, with reference to the accompanying drawings, which illustrate a preferred embodiment, without limiting the scope of application of the invention, and in which:
- Figure 1 is a top plan view, with some parts cut away to better illustrate others, of a rear, self-steering axle of a truck or articulated truck equipped with the device for controlling the steering angle according to the present invention;
- Figure 2 is a scaled-up top plan view, with some parts cut away to better illustrate others, of a detail from Figure 1, illustrating part of the axle equipped with the device disclosed;
- Figure 3 illustrates a cross-section III - III from Figure 2;
- Figure 4 is a schematic top plan view, with some parts cut away to better illustrate others, of part of a front, steering axle equipped with the device according to the present invention;
- Figure 5 illustrates a cross-section V - V from Figure 4.

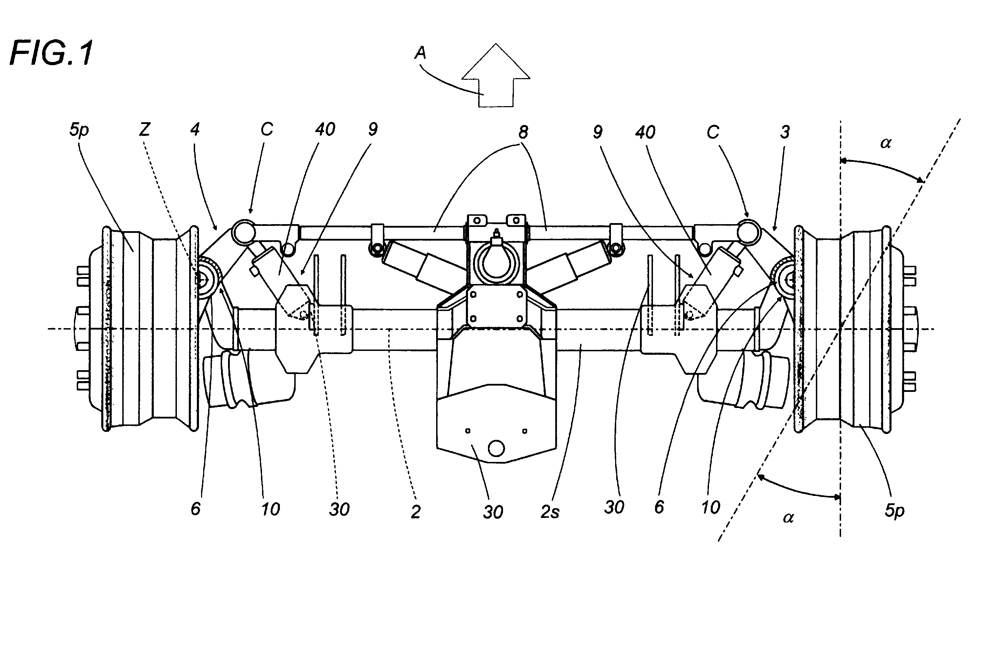

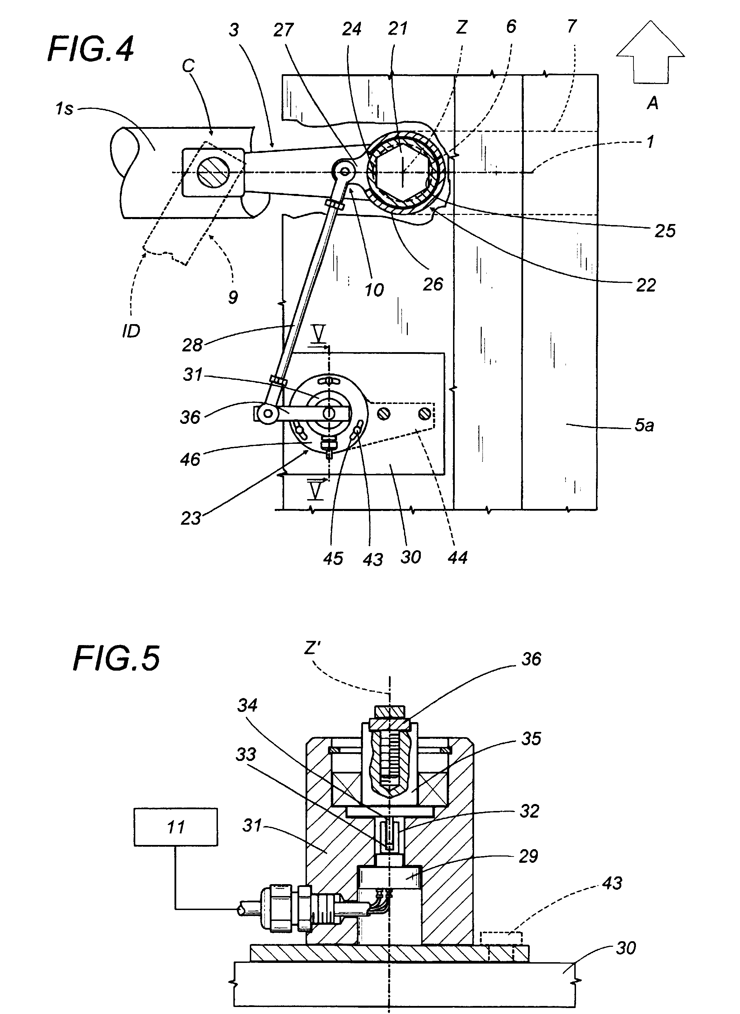

With reference to the accompanying drawings, and in particular Figure 1, the device for controlling the steering angle disclosed is fitted on medium- to large-sized trucks or articulated trucks which have a first, front, steering axle 1 (partially visible in Figure 4) and at least one second, rear axle 2 which is self-steering relative to the normal direction of travel A of the truck or articulated truck.

These first and second axles 1 and 2 each consist of a rigid axle beams ls and 2s (which form the basic framework of the axle assemblies) and a pair of stub axles or pins 3 and 4 attached to a corresponding wheel 5a (front pair) and 5p (rear pair).

Each of the stub axles 3 and 4 comprise a central pin 6 which rotates about its vertical axis Z, to which a support rod 7 for the wheel 5a and 5p is attached, whilst the two stub axles 3 and 4 of each steering axle 1 and 2 are connected by a cross-member 8 which defines a mechanism, labelled C, designed to allow simultaneous steering of the wheels 5a and 5p.

In the accompanying drawings, the numeral 9 indicates means for moving the wheels 5a and 5p which act upon each mechanism C and are designed to allow an angling or rotation α of the wheels relative to the direction of travel A. In the embodiment illustrated, the front wheels 5a are controlled by a known power steering unit ID (partially illustrated using a dashed line, since it is of the known type), whilst the rear wheels 5p are controlled (when necessary) by a pair of hydraulic actuators 40 located at the ends of the self-steering axle 2, with one end attached to part of the fixed chassis 30 of the truck, and the other to the joint between the stub axle 3 and 4 and the end of the cross-member 8.

The numeral 10 indicates means for detecting the angle of inclination α that may be assumed by the wheels 5a and 5p on each axle 1 and 2, the means connected to a unit 11 which controls the angle of the pairs of wheels 5a and 5p (the control unit 11 is illustrated as a block by way of example only, being of the known type and not part of the subject matter of the present invention, although described in the patents referred to in the introduction).

These means 10 for detecting the angle of inclination α are attached to one of the rotation pins 6 of a wheel 5a and 5p on each axle 1 and 2.

More specifically, the means 10 are located, in the case of the second, rear, self-steering axle 2, coaxial with the vertical axis Z of rotation of a wheel 5p, at the upper end of the pin 6, and are attached to the pin in such a way that they can rotate.

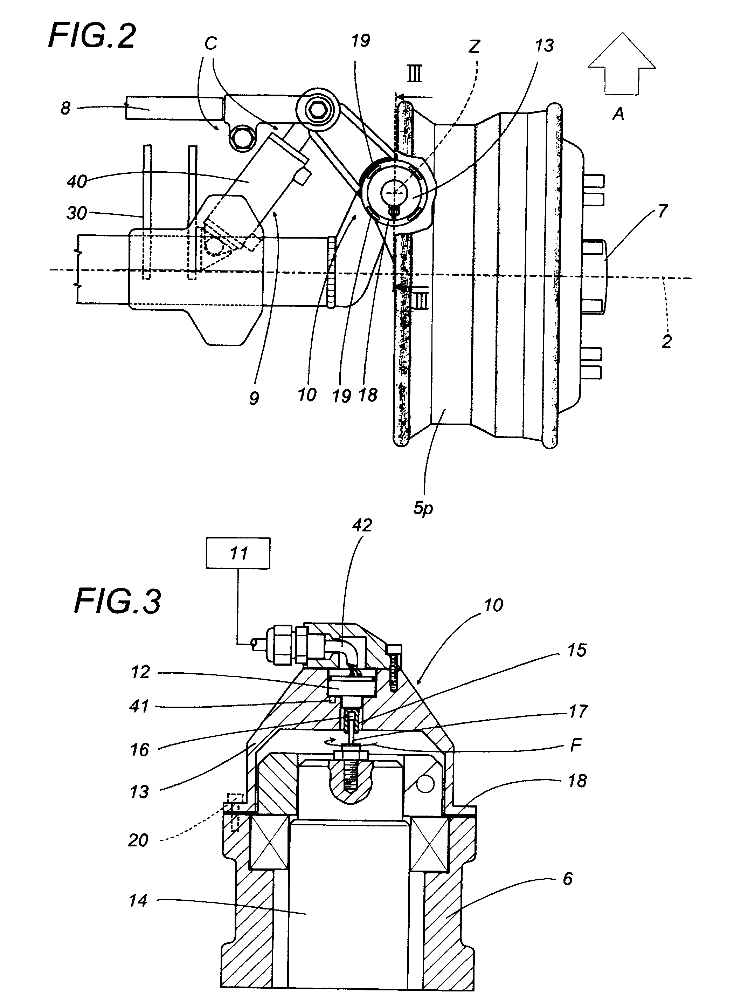

With reference to the construction of the embodiment (see also Figures 2 and 3), the detection means 10 comprise a rotary transducer 12 inserted in a bell-shaped covering element 13 attached to a rotary bushing which defines the rotation pin 6. The bushing 6 coaxially houses a pin 14 fixed to the axle beam 2s and defines the support for the latter near the wheel 5p.

Observing Figure 3 in particular, it may be noticed that the above-mentioned transducer 12 has a first vertical rod 15 which projects downwards and rotates about the vertical axis Z (see arrow F), and has a central notch 16 which houses one end of a second vertical rod 17, coaxial with the first, the opposite end of the second vertical rod being rigidly integral with the fixed pin 14.

The transducer 12 is fixed to the covering element 13 without the possibility of rotating, thanks to a pin 41 housed in the covering element, and is connected to the control unit by electrical connections 42.

The bell-shaped covering element 13 has a lower edge 18 which makes contact with the rotary bushing 6 and has a plurality of slots 19 for the passage of the fixing means 20 for the element 13. The slots 19 allow the adjustment, in rotation, of the connection between the first and second rods 15 and 17, depending on the position assumed by the bushing 6 during assembly. That is to say, they allow the two rods to be connected without bringing the wheels 5p into a given position and, in addition, allow a more convenient setting on the control unit 11.

Figures 4 and 5 illustrate a possible embodiment of the detection means 10 that may be applied to the front, steering axle 1, which, as already indicated, envisage a control and manoeuvre unit connected to the power steering system ID connected to the stub axle 3 which, in turn, comprises threaded means 21 for locking the upper section of the rotation pin 6 of the front wheels 5a to the stub axle 3. The locking means 21 (which are always present in the basic mechanism of the steering structure of a truck) consists of a polygonal-head bolt (in Figures 4 and 5 it is a hexagonal-head bolt).

In this situation, the adjustment means 10 comprise a first element 22 for connection to the threaded bolt 21 and for directly detecting the angle *a* of the wheel 5a, and a second element 23 for adjusting the angle, again located near the bolt 21.

More precisely, the first, connection and detection element 22 comprises a ring nut 24 with a seat 25 that matches and connects to the bolt 21 and can be fixed to the rotation pin 6 by screw means not illustrated. On the outer circumference of the ring nut 24 is a counter-ring nut 26 which rotates about the vertical axis Z independently of the latter ring nut, so as to allow a positioning relative to the power steering unit ID and stub axle 3, 4 irrespective of the position assumed by the bolt 21 after it has been locked on the pin 6.

The ring nut 24 is applied to and fixed on the ready-assembled bolt, whilst the counter-ring nut 26 is first adjusted relative to the configuration assumed by the control mechanism for the steered wheels 5a.

Following adjustment relative to the steering axle 1, the counter-ring nut 26 may, in turn, be fixed to the pin 6 and comprises a radial projection 27 with a seat for the end of a rod 28 which connects the counter-ring nut 26 to the above-mentioned second, adjustment element 23.

Similarly to the embodiment described for the rear axle 2, the second element 23 comprises (see Figure 4) a rotary transducer 29 fixed to part of the fixed chassis 30 of the truck or motor vehicle, close to the wheel 5a.

Again observing Figure 4, in addition to the rotary transducer 29, the second, adjustment element 23 comprises a body 31 which houses the transducer 29, said body 31 being directly fixed to the fixed chassis 30 by screw means 43, or with the aid of a bracket 44 if the vehicle chassis 30 has a special configuration near the wheel 5a.

As in the previous embodiment, the body 31 has slots 45 on a fixing edge 46, to allow adjustment of the two rods 32 and 34 during assembly.

Returning to the transducer 29, it has a first vertical rod 32 which rotates about its vertical axis Z', parallel the vertical axis of rotation Z. The free end of the rod has a slot 33 in which it can be attached to a second rotary rod 34 integral with a cylinder 35 which rotates freely and is partially housed in the support body 31.

The end of the cylinder 35 outside the body 31 is, in turn, attached to a control arm 36 which is, in turn, attached to the end of the connecting rod 28.

This creates a kind of partial "four-bar linkage" with which the angle of inclination α of the front wheels 5a can be adjusted.

The detection means 10 of the embodiment described above are illustrated on the right-hand wheels of the truck or articulated truck, relative to the direction of travel A, although they may, obviously, be positioned on the left-hand wheels without compromising the effectiveness of the present invention.

The device described above, therefore, achieves the above-mentioned aims through an extremely simple and economical construction which, at the same time, maintains a high level of precision in detecting the steering angle.

However, the basic concept is to envisage an angle detector-transducer which may be used, in its standard configuration, both for the rear axle and for the front steering mechanism, using a kit which adapts it to the steering mechanism and to the system which connects said mechanism to the wheel.

The positioning of the detector on or near the rotation pin allows a more compact system to be obtained. It is also better protected thanks to its proximity to the wheel.

The embodiment designed for the front axle allows the detector to be fitted on the locking bolt without necessitating the disassembly of any elements and, therefore, without changing the balance of the motor vehicle steering system.

The present invention may be subject to numerous modifications and variations, all encompassed by the original design concept. Moreover, all components may be replaced with technically equivalent parts.

## Claims

1. A device for controlling the steering angle in trucks or articulated trucks having a first, front, steering axle (1) and at least one second, rear axle (2) which is self-steering relative to a direction of travel (A) of the truck or articulated truck; the first and second axles (1, 2) each comprising a rigid axle beam (ls, 2s) and a pair of stub axles or pins (3, 4) attached to a corresponding wheel (5a, 5p) and each comprising a central pin (6) which rotates about its vertical axis (Z), there being a support rod (7) for the wheel (5a, 5p) attached to said pin; the two stub axles (3, 4) of each steering axle (1, 2) being connected to one another by a cross-member (8) defining a mechanism (C) designed to allow simultaneous steering of the wheels (5a, 5p); means (9) for moving the wheels (5a, 5p) being envisaged, acting upon each mechanism and designed to allow an angling (α) of the wheels (5a, 5p) relative to the direction of travel (A); means (10) for detecting the angle (α) of the wheels (5a, 5p) being envisaged on each axle (1, 2) and being connected to a control unit (11) which controls the angle of the pair of wheels (5a, 5p), the device being characterised in that the means (10) for detecting the angle (α) of the wheels (5a, 5p) are attached to at least one rotation pin (6) of the wheel (5a, 5p) for each first and second axle (1, 2).

2. The device according to claim 1, characterised in that the detection means (10) are envisaged on the second, rear, self-steering axle (2) and are positioned coaxial to the vertical axis (Z) of rotation of one of the wheels (5a, 5p), at the upper end of the pin (6), being connected to the pin in such a way that they can rotate.

3. The device according to claim 2, characterised in that the detection means (10) comprise a rotary transducer (12) inserted in a bell-shaped covering element (13), the latter being attached to a rotary bushing, defining the rotation pin (6), covering a pin (14) fixed to a relative axle beam (2s); the transducer (12) having a first vertical rod (15), which rotates about the vertical axis (Z) and has a notch (16) which houses one end of a second vertical rod (17), coaxial with the first, the other end of the second vertical rod being rigidly integral with the fixed pin (14).

4. The device according to claim 3, characterised in that the bell-shaped covering element (13) has a lower edge (18) which makes contact with the rotary bushing (6), said edge having a plurality of slots (19) for the passage of means (20) for fixing the element (13), the slots (19) being designed to allow an adjustment, in rotation, of the connection between the first rod (15) and the second rod (17), depending on the position assumed by the bushing (6) during assembly.

5. The device according to claim 1, where the first, front, steering axle (1) comprises threaded means (21) for locking the upper section of the rotation pin (6) to a control unit for the front steering of the truck or articulated truck, the device being characterised in that the adjustment means (10) comprise a first element (22) for connection to the threaded locking means (21) and for directly detecting the angle of the wheel (5a); said first element (22) being connected to a second element (23) for adjusting said angle, the latter being positioned close to the threaded means (21).

6. The device according to claim 5, where the threaded locking means (21) consist of a polygonal-head threaded bolt, characterised in that the first, connecting and detection element (22) comprises a ring nut (24) having a seat (25) which matches and can be connected to the bolt (21) and fixed to the rotation pin (6), and a counter-ring nut (26) which may be positioned on the outer circumference of the ring nut (24), the counter-ring nut rotating about a vertical axis (Z) independently of the ring nut, allowing its positioning relative to the steering unit irrespective of the position assumed by the bolt (21); it being possible to fix the counter-ring nut (26) to the pin (6), and the counter-ring nut having a radial projection (27) with a seat for connection to the end of a rod (28) which connects the counter-ring nut (26) to the second, adjustment element (23), comprising a rotary transducer (29) fixed to part of the fixed chassis (30) of the truck or motor vehicle, close to the wheel (5a).

7. The device according to claim 6, characterised in that the second, adjustment element (23) consists of the rotary transducer (29), being stably housed in a support body (31) fixed to the fixed chassis (30); said transducer (29) having a first vertical rod (32) which rotates about its vertical axis (Z'), parallel with the vertical axis of rotation (Z), the free end of the rod (32) having a slot (33) in which a second rotary rod (34) integral with a cylinder (35) may be connected, the cylinder being free to rotate and partially housed in the support body (31); the end of the cylinder (35) outside the body (31) being connected to a control arm (36), in turn attached to the end of the connecting rod (28).
